(19) Europäisches Patentamt
European Patent Office
Office européen des brevets

(11) **EP 4 535 096 A1**

(12) **EUROPEAN PATENT APPLICATION**

(43) Date of publication:
**09.04.2025 Bulletin 2025/15**

(21) Application number: **23201796.2**

(22) Date of filing: **05.10.2023**

(51) International Patent Classification (IPC):
**G05B 13/00** (2006.01)   **G06N 3/0455** (2023.01)
**G06N 3/092** (2023.01)   **B60W 60/00** (2020.01)

(52) Cooperative Patent Classification (CPC):
**G05B 13/0265; B25J 9/163; G06N 3/0455;**
**G06N 3/092;** G05B 2219/40499

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Robert Bosch GmbH**
**70442 Stuttgart (DE)**

(72) Inventors:
• **Soffair, Nitsan**
**3508409 Haifa (IL)**
• **Avner, Orly**
**Haifa (IL)**
• **Di Castro, Dotan**
**3440619 Haifa (IL)**

(54) **DEVICE AND METHOD TO IMPROVE REINFORCEMENT LEARNING**

(57)   A computer-implemented method of learning a policy for controlling a computercontrolled system, in particular a robot, by reinforcement learning, comprising the steps of: Observing a current state (s) of an environment of the computercontrolled system. Interacting (S12) with the environment by carrying out the steps of: Determining an action (a) by the policy, which is an actor network, depending on the current state (s), Executing the action (a) by the computercontrolled system, receiving a reward (r) and the next state (s'), and storing the interaction with the environment as an experience in a replay buffer. Sampling (13) a batch of experiences from the replay buffer. Computing (S15) Q values by at least two critic networks for the experiences in said batch. Determining a standard derivation of the Q values for the experiences in said batch for each of the critic networks. Updating (S17) critic parameters depending on the Bellman equation and adding the standard derivations as regularization.

**Fig. 1**

EP 4 535 096 A1

## Description

The invention concerns a method of continuous-space reinforcement learning algorithm that subtracts a Q-target network standard deviation from a Q-target network resulting in a tighter upper-bound on Q-values estimation and a computer program and a machine-readable storage medium and a system.

Prior art

Reinforcement learning (RL) is an area of machine learning concerned with how agents ought to take actions in an environment in order to maximize the notion of cumulative reward. Reinforcement learning can be utilized for solving control problems where the model is missing, and the action space is continuous. For example the publication of Kumar, A., Zhou, A., Tucker, G., & Levine, S. (2020). Conservative q-learning for offline reinforcement learning. Advances in Neural Information Processing Systems, (online available https://proceedings.neurips.cc/paper_files/paper/2020/file/0d2b2061826a5df3221 116a5085a6052-Paper.pdf) propose a conservative Q-learning (CQL) by taking a minimal Q-target value from N critics ensemble as a conservative estimation.

From the publication of Hasselt, Hado "Double Q-learning." Advances in neural information processing systems 23 (2010) (online available https://proceedings.neurips.cc/paper_files/paper/2010/file/091d584fced301 b4426 54dd8c23b3fc9-Paper.pdf) a technique referred to as "Double Q-learning" is known. This technique improves RL in that both its Q-functions converge to a single fixed point.

Advantages of the invention

There are several well-known methods today for solving RL problems with continuous action space, both in the online settings (where an agent interacts with the environment) and in the offline setting (where the agent gets some offline data of previous interaction under some policy which interacts with the environment). The present invention proposes devise an algorithm where (1) some of its computationally heavy parts that prevent it to run fast is removed and (2) some mechanism to make it more conservative in its Q-value estimation is added where this mechanism is based on some agreement between two almost identical networks used in the algorithm to estimate the Q-value. Thereby, the present invention represents an improvement compared to the prior art with respect to compute, training time, and total time steps.

Disclosure of the invention

In a first aspect, an implemented method of learning a policy ($\pi$) for controlling a computer-controlled system by reinforcement learning is proposed.

The method starts with a step of iteratively carrying out the following steps as a loop:
The loop starts with a step of observing a current state (s) of an environment of the computer-controlled system. It follows then a step of interacting with the environment by carrying out the steps of: Determining an action (a) by the policy ($\pi$), which is an actor network, depending on the current state (s), Executing the action (a) by the computer-controlled system, receiving a reward (r) and the next state (s'), and storing the interaction with the environment as an experience in a replay buffer. It follows then a step of sampling a batch of experiences from the replay buffer. The batch can comprise any number of experiences, preferably a number with a potency to the base equals two ($2^n$, $n$ = 1,2,...), e.g. typical numbers are 256, 1024, 4096 or 8192, etc. The term batch can be understood as known from the field of deep learning, where a batch refers to a size of numbers of samples that will be propagated through the network. It follows then a step of computing Q values by at least two critic networks for the experiences in said batch. It follows then a step of determining a standard derivation of the Q values for the experiences in said batch for each of the critic networks. It follows then a step of updating critic parameters depending on the Bellman equation and adding the standard derivations as regularization. Finally, the actor parameters are also updated. Preferably, the parameters are updated by maximize the Q values directly, e.g. with the well-known DDPG method.

This method provides the advantage that the convergence is improved by adding the standard deviation of the Q-values.

Furthermore, it is proposed that after sampling the experiences, state-action latent embeddings are determined for each of the sampled experiences, that the state-action latent embeddings comprising determining embeddings for the current state and next state and preferably a state-action embedding depending on the observed current state by an embedding encoder and that the actor network and the critic network get at least one of said embeddings as further input.

The inventors observed that this specific combination of adding a standard derivation of the Q-values plus the SALE technique of TD7 results in an outstanding learning behavior and problem-solving capabilities for reinforcement learning.

Embodiments of the invention will be discussed with reference to the following figures in more detail. The figures show:

Figure 1      a schematic flow diagram of an embodiment of the invention;

Figure 2      a control system controlling an at least partially autonomous robot;

Figure 3      a control system controlling a manufacturing machine;

Figure 4      a training system for controlling the classifier.

Description of the embodiments

At first, the general setting of the invention is defined. We model the problem using a Markov Decision Process (MDP), where $\mathcal{S}$ and $\mathcal{A}$ are the state space and action space, respectively. We let $P(s'|s,\ a)$ denote the probability of transitioning from state $s \in \mathcal{S}$ to state $s' \in \mathcal{S}$ when applying action $a \in \mathcal{A}$. We consider a probabilistic policy $\pi_\phi(a|s)$, parameterized by $\phi \in \Phi$ which expresses the probability of the agent to choose an action $a$ given that it is in state s. The reward function is denoted by $r(s,\ a)$. The goal of the agent is to find a policy that maximizes the Q-functionthat the agent receives during its interaction with the environment:

(eq. 1)

$$Q_\phi(s,a) \triangleq E\left[\sum_{t=0}^\infty r(s_t, a_t) \,|\, s_0 = s, a_0 = a\right].$$

The following approaches are known from the literature for the above defined setting:
Actor Critic methods have two components. One component is an actor that learns a policy $\pi\colon \mathcal{S} \to \mathcal{A}$ mapping state to acion. The second component is a critic that learns a state-action pair estimation $Q(\cdot,\cdot)\colon \mathcal{S} \times \mathcal{A} \to \mathcal{A} \to R$.
In stochastic environments Q-learning performs poorly, mainly in terms of stability due to its bootstrap nature. This poor performance is caused by over-estimations of action values resulting from a positive bias that is introduced because Q-learning uses the maximum action value as an approximation for the maximum expected action value. In Double-Q-learning, two Q-functions denoted by $Q^A(\cdot,\cdot)$ and $Q^B(\cdot,\cdot)$ as utilized. Each of these Q-functions is updated with a value from the other Q-function for the next state. Let us denote the action $a^*$ to be the maximal valued action in state s' according to $Q^A$. Next, instead of using the value $Q^A(s',a^*) = \max_a Q^A(s',a)$ to update $Q^A$, as Q-learning does, Double Q-learning use the value $Q^B(s',a^*)$. Since $Q^B$ was updated on the same problem with different experience samples -- it is unbiased w.r.t. action $a^*$. Interchanging the roles of the two networks yield the following updates:

(eq. 2)

$$Q^A(s,a) \leftarrow Q^A(s,a) + \alpha(s,a)\left(r + \gamma Q^B(s',a^*) - Q^A(s,a)\right), a^* = argmax_a Q^A(s',a)$$

$$Q^B(s,a) \leftarrow Q^B(s,a) + \alpha(s,a)\left(r + \gamma Q^A(s',b^*) - Q^B(s,a)\right), b^* = argmax_a Q^B(s',a)$$

Deterministic Policy Gradient (DPG) algorithm is an expected gradient of the action-value function $Q\colon \mathcal{S} \times \mathcal{A} \to R$. This gradient can be estimated much more efficiently than the usual stochastic policy gradient. DPG introduces an off-policy actor-critic algorithm that learns a deterministic target policy $\pi$ from an exploratory behavior policy $\mu$. Deep Deterministic Policy Gradient (DDPG) is a deep version of DPG. Since it is not possible to straightforwardly apply Q-learning to continuous action spaces, finding the greedy policy requires optimization at every time step. This is too slow to be practical with large function approximators. Instead, DDPG uses an actor-critic architecture based on DPG where the gradient is estimated based on the following

(eq. 3)

$$\nabla_{\theta^\mu} J \approx E_{s_t \sim \rho^\beta}\left[\nabla_a Q(s,a|\theta^Q)|_{s=s_t, a=\mu(s_t)} \nabla_{\theta_\mu} \mu(s|\theta^\mu)|_{s=s_t}\right]$$

Furthermore, there exist several improved methods of the DDPG. One of said method is called Twin Delayed DDPG (TD3). The TD3 algorithm is an algorithm that is based on DDPG with 3 additional tricks. First, it has a clipped action (or target policy smoothing), i.e., the action applied is:

(eq. 4)

$$a(s) = clip\big(\mu(s) + clip(\epsilon, -c, c), a_{low}, a_{high}\big)$$

Essentially, this is a regularizer to action taken, mitigating the risk of taking too sharp action.

Second, TD3 has a mechanism to reduce overestimation of the Q-value. This is done with considering the more conservative estimate of the Q-value:

(eq. 5)

$$y_1 = r + \gamma \min_{i=1,2} Q_{\theta_i'}\big(s', \pi_{\phi_1}(s')\big)$$

In the following, a novel method referred to as 'Std Q-target' is presented that shall provide a more efficient approach for the general setting above compared to the previously discussed well-known methods.

In a nutshell, this algorithm is based on the TD3 algorithm with two additions: (1) a State Action Learned Embedding (SALE) addition as known from TD7 and (2) a conservative estimation based on the standard deviation between the two networks.

The known State Action Learned Embeddings (SALE) of the well-known TD7 algortihm learns embeddings for the state-action and state ($z^{sa}, z^s$) that tries to capture the transition representations, i.e.,

(eq. 5)

$$z^{sa} := g(z^s, a), \quad z^s := f(s)$$

where g(.,.) and $f(\cdot)$ are the encoders satisfying the minimization of the following loss

(eq. 6)

$$\mathcal{L}(f, g) = \big(g(f(s), a) - f(s')\big)$$

where s' denotes the next state. Practically, TD7 concatenates embedding with state-action for the Q-function evaluation:

(eq. 7)

$$Q(s, a) \rightarrow Q(z^{sa}, z^s, s, a)$$

In addition, TD7 concatenates embedding with state-action for the policy evaluation, i.e.,

(eq. 8)

$$\pi(s) \rightarrow \pi(z^s, s)$$

Therefore, the TD7 target formula becomes:

(eq. 9)

$$y = r + \gamma \min_{i=1,2} Q_{\theta_i'}\big(s', a', z_{\rho''}^{s'a'}, z_{\psi''}^{s'}\big), \quad a' \leftarrow \pi_{\phi'}\big(s', z_{\psi''}^{s'}\big) + \epsilon, \quad \epsilon \sim \mathcal{N}(0,1)$$

and the actor update-rule is:

(eq. 10)

$$\nabla_\phi J \approx \frac{1}{|\mathcal{B}|} \sum_{(s,a) \in \mathcal{B}} \frac{1}{2} \sum_{i=1,2} \Big[ Q_{\theta_i}\big(s, a, z_\rho^{sa}, z_{\psi'}^s\big)\Big], \quad a = \pi_\phi\big(s, z_{\psi'}^s\big)$$

For the detailed discussion of the Std Q-target algorithm, we begin with defining the standard deviation (std) of a batch. Let us consider a batch $\mathcal{B}$. We denote with $std\left(s', a', z_{\psi''}^{s'}, z_{\rho''}^{s'a'}\right)$ to be the empirical standard deviation of the state-action (s', a'). Practically, in our case, since there are only two networks, this standard deviation is based on two samples $Q_{\theta_i'}\left(s', a', z_{\psi''}^{s'}, z_{\rho''}^{s'a'}\right)$ for i = 1,2. We denote this standard deviation *std* with:

(eq. 11)

$$std\left(s', a', z_{\psi''}^{s'}, z_{\rho''}^{s'a'}\right) = std_{i=1,2}\left[Q_{\theta_i'}\left(s', a', z_{\psi''}^{s'}, z_{\rho''}^{s'a'}\right)\right]$$

and the *std* of the batch (which is the mean of *stds*) with

(eq. 12)

$$std[\mathcal{B}] = \frac{1}{|\mathcal{B}|} \sum_{\left(s', a', z_{\psi''}^{s'}, z_{\rho''}^{s'a'}\right) \sim \mathcal{B}} std_{i=1,2}\left[Q_{\theta_i'}\left(s', a', z_{\psi''}^{s'}, z_{\rho''}^{s'a'}\right)\right]$$

The intuition behind std[B] is as follows. If the the two networks mostly agree on the Q-value estimation, the std will be negligible. Therefore, we argue that Q-value estimation is relatively correct. If both networks disagree on the estimation, we would like to provide a conservative estimation for the Q-value.

It is noted that in this case, the std estimation can be based on two networks, but generalization to *n* networks is straight forward.

The Std Q-target formula is as follows:

(eq. 13)

$$y = r + \gamma \min_{i=1,2} Q_{\theta_i'}\left(s', a', z_{\psi''}^{s'}, z_{\rho''}^{s'a'}\right) - std[\mathcal{B}]$$

while the action is chosen according to:

(eq. 14)

$$a' \leftarrow \pi_{\phi'}\left(s', z_{\psi''}^{s'}\right) + \epsilon, \qquad \epsilon \sim \mathcal{N}(0,1)$$

The proposed Std Q-target can be summarized as follows by the following Pseudo Code, wherein the LAP-Huber is similarly chosen as for TD3:

**Input:**

1. $f_\psi : S \to \mathbb{R}^N$      // State encoder
2. $f_{\psi'} : S \to \mathbb{R}^N$      // State fixed encoder
3. $f_{\psi''} : S \to \mathbb{R}^N$      // State target fixed encoder
4. $g_\rho : A \times \mathbb{R}^N \to \mathbb{R}^N$      // State-action encoder
5. $g_{\rho'} : A \times \mathbb{R}^N \to \mathbb{R}^N$      // State-action fixed-encoder
6. $g_{\rho''} : A \times \mathbb{R}^N \to \mathbb{R}^N$      // State-action target fixed-encoder
7. $\pi_\phi : S \times \mathbb{R}^N \to A$      // Actor network
8. $\pi_{\phi'} : S \times \mathbb{R}^N \to A$      // Target actor network
9. $Q_\theta : S \times A \times \mathbb{R}^N \times \mathbb{R}^N \to \mathbb{R}$      // Critic network
10. $Q_{\theta'} : S \times A \times \mathbb{R}^N \times \mathbb{R}^N \to \mathbb{R}$      // Target critic network
11. $D \leftarrow \emptyset$ is a replay buffer

1: **for** each iteration **do**
2:      Observe state $s$
3:      Select action $a \sim \pi_\phi(s, z_{\psi'}^s) + \epsilon, \quad \epsilon \sim \mathcal{N}(0,1)$
4:      Take a step $a$ in state $s$ and receive state next $s'$ reward $r$ and terminal signal $d$
5:      Store tuple $D \leftarrow D \cup \{(s,a,r,s',d)\}$
6:      Sample batch $B \sim D$
7:      Compute SALE
         1. $z_\psi^s = f_\psi(s)$      // State embedding by encoder
         2. $z_\psi^{s'} = f_\psi(s')$      // Next state embedding by encoder
         3. $z_\rho^{sa} = g_\rho(z_\psi^s, a)$      // State-action embedding by encoder
8:      Compute Q-target
         1. $a' = \pi_\phi(s', z_{\psi''}^{s'}) + \epsilon, \quad \epsilon \sim \mathcal{N}(0,1)$
         2. $z_{\psi''}^{s'} = f_{\psi''}(s')$      // Next state embedding by target fixed encoder
         3. $z_{\rho''}^{s'a'} = g_{\rho''}(z_{\psi''}^{s'}, a')$      // Next state-action embedding by target fixed encoder
         4. Compute Q-target $y$ by formula 13
9:      Update SALE parameters
     $\nabla_\psi J \approx \frac{1}{|B|} \sum_{(s,a) \in B} [z_\psi^{s'} - z_\psi^{sa}]^2$
10:      Update critic parameters
         1. $z_{\psi'}^s = f_{\psi'}(s)$      // State embedding by fixed encoder
         2. $z_\rho^{sa} = g_{\rho'}(z_{\psi'}^s, a)$      // State-action embedding by fixed encoder
         3. $\nabla_\theta J \approx \frac{1}{|B|} \sum_{(s,a) \in B} |\text{LAP\_huber}(y - Q_{\theta_i'}(s, a, z_{\psi'}^s, z_{\rho'}^{sa}))|$
11:      Update actor parameters by formula 10
12:      Update targets
         1. $\theta' \leftarrow \theta$      // Update target critic by critic
         2. $\phi' \leftarrow \phi$      // Update target actor by actor
         3. $\psi'' \leftarrow \psi'$      // Update target fixed encoder by fixed encoder
         4. $\psi' \leftarrow \psi$      // Update fixed encoder by encoder
13: **end for**

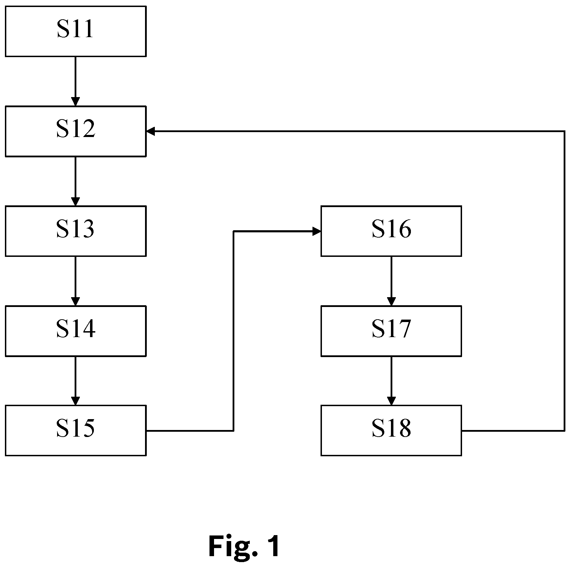

Figure 1 shows a flow chart of the proposed Std Q-target algorithm for training a policy via reinforcement learning.

The method starts with step S11. In step S11, the following networks are initialized, each with specific functions and trainable parameters:

State Encoders:

$f_\psi$ encodes states into high-dimensional vectors.
$f_{\psi'}$ is a fixed state encoder.
$f_{\psi''}$ is a target fixed state encoder.

State-Action Encoders:

$g_\rho$ encodes state-action pairs into high-dimensional vectors.
$g_{\rho'}$ is a fixed state-action encoder.
$g_{\rho''}$ is a target fixed state-action encoder.

Actor Networks:

$\pi_\phi$ selects actions based on states.
$\pi_{\phi'}$ is a target actor network.

Critic Networks:

$Q_\theta$ evaluates state-action pairs.
$Q_{\theta'}$ is a target critic network.

Furthermore, an empty replay buffer $\mathcal{D}$ is initialized. The algorithm utilizes a replay buffer $\mathcal{D}$ to store experiences encountered during training. These experiences consist of tuples containing the current state, action, reward, next state, and terminal signal.

After step S11 is terminated, a loop for several iterations is carried out. In each iteration the following steps are carried out:

In a first step S12 of the loop, an interaction with the environment is carried out. The interaction comprises several substeps of observing the current state s and selecting an action *a* using the policy $\pi$ ,with preferably added noise to encourage exploration. Next, the selected action *a* in state s is carried out and the next state s', a reward r, and a terminal signal d are obtained. Finally, an experience of said interaction is stored as tuple (*s,a,r,s',d*) in the replay buffer.

In a second step S13 of the loop, a batch $\mathcal{B}$ of experiences is randomly sampled from the replay buffer.

In a third step S14 of the loop, the State-Action Latent Embeddings (SALE) are determined by the respective encoder networks.

In a fourth step S15 of the loop, the Q-target according to eq. 13 above is determined.

In a fifth step S16 of the loop, an update of the SALE parameters can be carried out:

$$\nabla J_\psi \approx \frac{1}{|\mathcal{B}|}\Sigma_{(s,a)\in\mathcal{B}}\left[z_\psi^{s'} - z_\psi^{sa}\right]^2$$

In a sixth step S17 of the loop, the critic parameters are updated:

$$\nabla_\theta J \approx \frac{1}{|\mathcal{B}|}\sum_{(s,a)\in\mathcal{B}}\left|\text{LAP\_huber}\left(y - Q_{\theta_i'}\left(s,a,z_{\psi'}^{s},z_{\rho'}^{sa}\right)\right)\right|$$

In a seventh step S18 of the loop, the actor parameters are updated according to eq. 10.

Finally, the target critic and target actor networks are updated by the above updated parameter and the same is carried out for the encoder networks in a similar manner.

The loop is repeated until a stopping criterion is fulfilled.

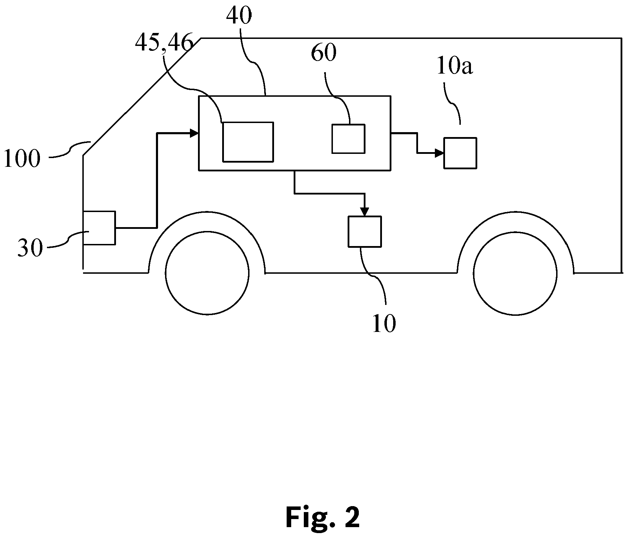

Shown in figure 2 is one embodiment of an actuator with a control system 40. Actuator and its environment will be jointly called actuator system. At preferably evenly spaced distances, a sensor 30 senses a condition of the actuator system. The sensor 30 may comprise several sensors. Preferably, sensor 30 is an optical sensor that takes images of the environment. An output signal S of sensor 30 (or, in case the sensor 30 comprises a plurality of sensors, an output signal S for each of the sensors) which encodes the sensed condition is transmitted to the control system 40.

Possible sensors include but are not limited to gyroscopes, accelerometers, force sensors, cameras, radar, lidar, angle encoders, etc. Note that oftentimes sensors do not directly measure the state of the system but rather observe a consequence of the state, e.g., a camera detects an image instead of directly the relative position of a car to other traffic participants. However, it is possible to filter the state from high-dimensional observations like images or lidar measurements.

Further, the system can provide a reward signal r that indicates the quality of the system's state and action that was taken. Typically, this reward signal is designed to steer the behavior of the learning algorithm. Generally, the reward signal should attribute large values to states/actions that are desirable and small (or negative) values to states/actions that should be avoided by the system.

Possible reward signals include but are not limited to negative tracking error for some reference state signal, indicator function for the success of a particular task, negative quadratic cost terms (akin to methods from optimal control), etc. It is also possible to construct another reward signal as a weighted some of other reward signals if the learning algorithm should strive for multiple goals at the same time.

Thereby, control system 40 receives a stream of sensor signals S. It then computes a series of actuator control commands A depending on the stream of sensor signals S, which are then transmitted to actuator unit 10 that converts the control commands A into mechanical movements or changes in physical quantities. For example, the actuator unit 10 may convert the control command A into an electric, hydraulic, pneumatic, thermal, magnetic and/or mechanical movement or change. Specific yet non-limiting examples include electrical motors, electroactive polymers, hydraulic cylinders, piezoelectric actuators, pneumatic actuators, servomechanisms, solenoids, stepper motors, etc.

Control system 40 receives the stream of sensor signals S of sensor 30 in an optional receiving unit 50. Receiving unit 50 transforms the sensor signals S into input signals x. Alternatively, in case of no receiving unit 50, each sensor signal S may directly be taken as an input signal x. Input signal x may, for example, be given as an excerpt from sensor signal S. Alternatively, sensor signal S may be processed to yield input signal x. Input signal x comprises image data corresponding to an image recorded by sensor 30. In other words, input signal x is provided in accordance with sensor signal S.

Input signal x is then passed on to the trained policy 60 according to Fig. 1, which may, for example, be given by an artificial neural network.

Policy 60 is parametrized by parameters $\phi$, which are stored in and provided by parameter storage $St_1$.

Policy 60 determines output signals y from input signals x. The output signal y comprises information that assigns one or more labels to the input signal x. Output signals y are transmitted to an optional conversion unit 80, which converts the output signals y into the control commands A. Actuator control commands A are then transmitted to actuator unit 10 for controlling actuator unit 10 accordingly. Alternatively, output signals y may directly be taken as control commands A.

Actuator unit 10 receives actuator control commands A, is controlled accordingly and carries out an action corresponding to actuator control commands A. Actuator unit 10 may comprise a control logic which transforms actuator control command A into a further control command, which is then used to control actuator 10.

In further embodiments, control system 40 may comprise sensor 30. In even further embodiments, control system 40 alternatively or additionally may comprise actuator 10.

Furthermore, control system 40 may comprise a processor 45 (or a plurality of processors) and at least one machine-readable storage medium 46 on which instructions are stored which, if carried out, cause control system 40 to carry out a method according to one aspect of the invention.

In a preferred embodiment of Figure 2, the control system 40 is used to control the actuator, which is an at least partially autonomous robot, e.g. an at least partially autonomous vehicle 100.

Sensor 30 may comprise one or more video sensors and/or one or more radar sensors and/or one or more ultrasonic sensors and/or one or more LiDAR sensors and or one or more position sensors (like e.g. GPS). Some or all of these sensors are preferably but not necessarily integrated in vehicle 100. Alternatively or additionally sensor 30 may comprise an information system for determining a state of the actuator system. One example for such an information system is a weather information system which determines a present or future state of the weather in environment 20.

Actuator unit 10, which is preferably integrated in vehicle 100, may be given by a brake, a propulsion system, an engine, a drivetrain, or a steering of vehicle 100. Actuator control commands A may be determined such that actuator (or actuators) unit 10 is/are controlled such that vehicle 100 avoids collisions with said detected objects. Detected objects may also be classified according to what the classifier 60 deems them most likely to be, e.g. pedestrians or trees, and actuator control commands A may be determined depending on the classification.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, actuator command control A may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses sensor 30, preferably an optical sensor, to determine a state of plants in the environment 20. Actuator unit 10 may be a nozzle for spraying chemicals. Depending on an identified species and/or an identified state of the plants, an actuator control command A may be determined to cause actuator unit 10 to spray the plants with a suitable quantity of suitable chemicals.

In even further embodiments, the at least partially autonomous robot may be given by a domestic appliance (not shown), like e.g. a washing machine, a stove, an oven, a microwave, or a dishwasher. Sensor 30, e.g. an optical sensor, may detect a state of an object which is to undergo processing by the household appliance. For example, in the case of the domestic appliance being a washing machine, sensor 30 may detect a state of the laundry inside the washing machine.

Actuator control signal A may then be determined depending on a detected material of the laundry.

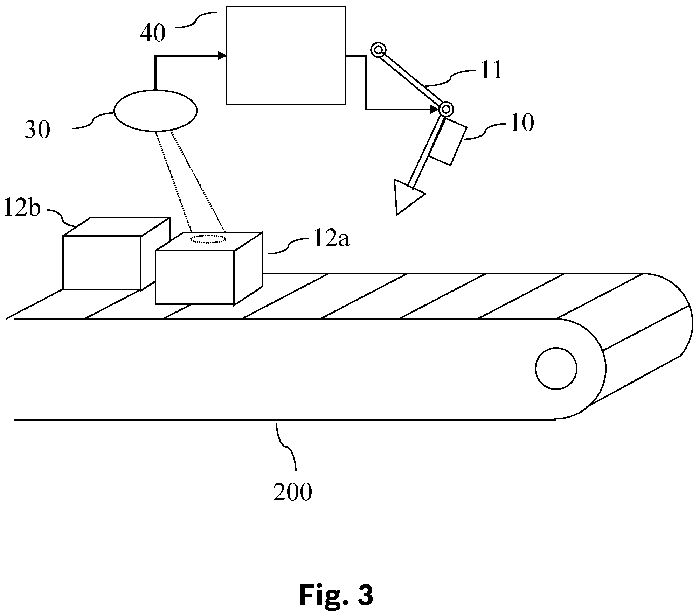

Shown in figure 3 is an embodiment in which control system 40 is used to control a manufacturing machine 11, e.g. a solder mounter, punch cutter, a cutter or a gun drill) of a manufacturing system 200, e.g. as part of a production line.

The control system 40 controls an actuator unit 10 which in turn control the manufacturing machine 11.

Sensor 30 may be given by an optical sensor which captures properties of e.g. a manufactured product 12. Policy 60 may determine a state of the manufactured product 12 from these captured properties. Actuator unit 10 which controls manufacturing machine 11 may then be controlled depending on the determined state of the manufactured product 12 for a subsequent manufacturing step of manufactured product 12. Or it may be envisioned that actuator unit 10 is controlled during manufacturing of a subsequent manufactured product 12 depending on the determined state of the manufactured product 12.

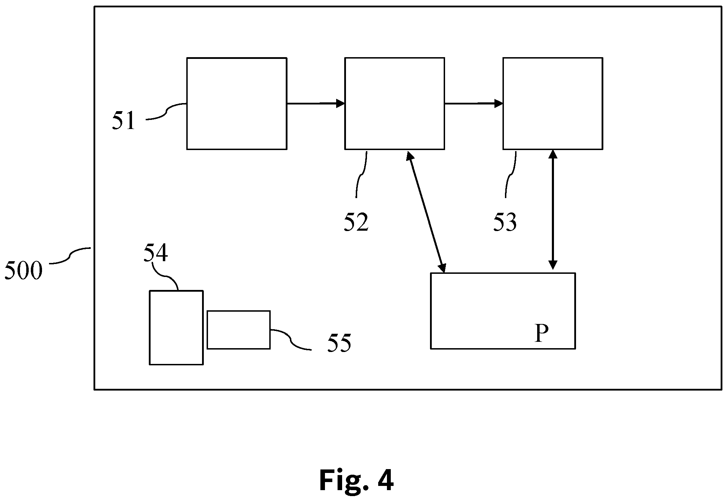

Shown in figure 4 is an embodiment of a training system 500. The training device 500 comprises a provider system 51, which provides input data from a training data set or measured in an environment. Input images are fed to the respective neural networks 52 to be trained according to Fig.1. Output variables and input data are supplied to an assessor 53, which determines acute hyper/parameters therefrom, which are transmitted to the parameter memory P, where they replace the current parameters.

The procedures executed by the training device 500 may be implemented as a computer program stored on a machine-readable storage medium 54 and executed by a processor 55.

The term "computer" covers any device for the processing of pre-defined calculation instructions. These calculation instructions can be in the form of software, or in the form of hardware, or also in a mixed form of software and hardware.

It is further understood that the procedures cannot only be completely implemented in software as described. They can also be implemented in hardware, or in a mixed form of software and hardware.

**Claims**

1.   A computer-implemented method of learning a policy ($\pi$) for controlling a computer-controlled system, in particular a robot, by reinforcement learning, comprising the steps of:

Iteratively carrying out the following steps:

Observing a current state (s) of an environment of the computer-controlled system;
interacting (S12) with the environment by carrying out the steps of: Determining an action (a) by the policy ($\pi$), which is an actor network, depending on the current state (s), Executing the action (a) by the computer-controlled system, receiving a reward (r) and the next state (s'), and storing the interaction with the environment as an experience in a replay buffer;
Sampling (13) a batch of experiences from the replay buffer;
Computing (S15) Q values by at least two critic networks for the experiences in said batch;

**characterized in that**

Determining a standard derivation of the Q values for the experiences in said batch for each of the critic networks;
Updating (S17) critic parameters depending on the Bellman equation and adding the standard derivations as regularization; and
Updating (S18) actor parameters by maximize the Q values.

2.   The method according to claim 1, **characterized in that** after sampling the experiences, state-action latent embeddings are determined for each of the sampled experiences, that the state-action latent embeddings comprising determining embeddings for the current state and next state and preferably a state-action embedding depending on the observed current state by an embedding encoder and that the actor network and the critic network get at least one of said embeddings as further input.

3.   The method according to claim 2, wherein the state-action latent embeddings are determined and utilized according to the SALE technique of the reinforcement learning algorithm TD7.

4.   The method according to claim 1-3, wherein the regularization of the Bellman equation is done by adding an average of the standard derivations of the Q-values of the different critic networks.

5. The method according to any one of preceding claims, wherein the reinforcement learning algorithm is TD3.

6. A computer-implemented method for using the policy (60) trained with the method according to any one of claims 1 to 5 for providing an actuator control signal (A) for controlling an actuator (10) of the computer-controlled technical system, comprising all the steps:

> Receiving a sensor signal (S) comprising data from a sensor (30),
> Determining a state of the environment depending on said sensor signal (S),
> Feeding said state into said policy (60) to obtain an output signal (y) that is an action; and
> Determining an actuator control signal (A) depending on said action.

7. The method according to claims 6, in which said actuator (10) controls an at least partially autonomous robot (100) and/or a manufacturing machine (200).

8. Computer program that is configured to cause a computer to carry out the method according to any one of claims 1 to 7 with all of its steps if the computer program is carried out by a processor (45, 145).

9. Machine-readable storage medium (46, 146) on which the computer program according to claim 8 is stored.

10. System (140) that is configured to carry out the method according to any one of claims 1 to 7.

Fig. 1

Fig. 2

Fig. 3

**Fig. 4**

Europäisches
Patentamt

European
Patent Office

Office européen
des brevets

# EUROPEAN SEARCH REPORT

Application Number

EP 23 20 1796

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TIONG TECKCHAI ET AL: "Deep Reinforcement Learning with Robust Deep Deterministic Policy Gradient", 2020 2ND INTERNATIONAL CONFERENCE ON ELECTRICAL, CONTROL AND INSTRUMENTATION ENGINEERING (ICECIE), IEEE, 28 November 2020 (2020-11-28), pages 1-5, XP033872267, DOI: 10.1109/ICECIE50279.2020.9309539 [retrieved on 2020-12-28] * algorithm 1; page 1; figures 3,5 * | 1-10 | INV. G05B13/00 G06N3/0455 G06N3/092 B60W60/00 |
| A | GONG XIAOYU ET AL: "Adaptive Estimation Q-learning with Uncertainty and Familiarity", PROCEEDINGS OF THE THIRTY-SECOND INTERNATIONAL JOINT CONFERENCE ON ARTIFICIAL INTELLIGENCE, 25 August 2023 (2023-08-25), pages 3750-3758, XP093141036, California DOI: 10.24963/ijcai.2023/417 ISBN: 978-1-956792-03-4 Retrieved from the Internet: URL:https://www.ijcai.org/proceedings/2023/0417.pdf [retrieved on 2024-03-13] * section 4, algorithm 1; page 1 - page 3 * | 1-10 | |

TECHNICAL FIELDS
SEARCHED      (IPC)

G05B
G06N
B60W

-/--

The present search report has been drawn up for all claims

| Place of search | Date of completion of the search | Examiner |
|---|---|---|
| Munich | 13 March 2024 | Thielemann, Benedikt |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 2

Europäisches
Patentamt

European
Patent Office

Office européen
des brevets

# EUROPEAN SEARCH REPORT

**Application Number**

**EP 23 20 1796**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Fujimoto Scott ET AL: "For SALE: State-Action Representation Learning for Deep Reinforcement Learning", arXiv.org, 4 June 2023 (2023-06-04), XP093141074, Ithaca DOI: 10.48550/arxiv.2306.02451 Retrieved from the Internet: URL:https://arxiv.org/pdf/2306.02451 [retrieved on 2024-03-13] * abstract * * section 4.1 * * page 2 * ----- | 2,3 | |
| A | Kober Jens ET AL: "Reinforcement learning in robotics: A survey", The International journal of robotics research, 27 September 2013 (2013-09-27), pages 1238-1274, XP093141090, London, England DOI: 10.1177/0278364913495721 Retrieved from the Internet: URL:https://web.archive.org/web/2013092709 5733/https://www.ias.tu-darmstadt.de/uploa ds/Publications/Kober_IJRR_2013.pdf [retrieved on 2024-03-13] * abstract * * page 13 – page 14; figures 5,8 * ----- | 6,7 | **TECHNICAL FIELDS SEARCHED (IPC)** |

The present search report has been drawn up for all claims

| Place of search | Date of completion of the search | Examiner |
|---|---|---|
| Munich | 13 March 2024 | Thielemann, Benedikt |

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KUMAR, A.** ; **ZHOU, A.** ; **TUCKER, G.** ; **LEVINE, S.** Conservative q-learning for offline reinforcement learning. *Advances in Neural Information Processing Systems*, 2020, https://proceedings.neurips.cc/paper_files/paper/2020/file/0d2b2061826a5df3221 116a5085a6052-Paper.pdf

- **HASSELT, HADO**. Double Q-learning.. *Advances in neural information processing systems*, 2010, vol. 23, https://proceedings.neurips.cc/paper_files/paper/2010/file/091d584fced301 b4426 54dd8c23b3fc9-Paper.pdf